# EUROPEAN PATENT APPLICATION

(11) **EP 2 466 886 A1**
(43) Date of publication of application: **20.06.2012**
(21) Application number: 10195597.9
(22) Date of filing: 17.12.2010
(51) Int. Cl.: H04N 7/16, H04N 5/445

(54) **System for previously notifying and registering content and programming channels and method thereof**

(71) Applicant: Kim, Young Phil, Guro-gu, Seoul (KR)
(72) Inventor: Kim, Young Phil, Guro-gu, Seoul (KR)
(74) Representative: Jeannet, Olivier

(57) **Abstract**

Disclosed herein is a system for previously notifying and registering Internet broadcasting content and programming channels and a method thereof. The system includes a management server. The management server includes a channel establishment module, a channel registration module, a program schedule generation module, a content registration module, and a content provision module. A content provider terminal, stored in a member subscription DataBase (DB), registers main keywords and cameras after member subscription has been performed, and the channel establishment module establishes channels. The channel registration module classifies the channels according to genre. The program schedule generation module generates a program schedule DB for respective channels and time zones. The content registration module enables the content provider terminal to select a desired time, to set scheduling of the provision of content at the selected time, and to store content in a content registration DB.

## Description

### BACKGROUND OF THE INVENTION

### 1. Field of the Invention

The present invention relates generally to an idea for previously anticipating, imagining, and sharing creative results which are anticipated in repetitious people's everyday life, to a system for previously notifying and registering content, produced by individuals using the Internet, in a form suitable for broadcasting and for programming channels and a detailed method thereof, and, more particularly, to a system for previously notifying and registering Internet broadcasting content and programming channels and a method thereof in which a program schedule for previously notifying visual content to be provided at a time point in the future is provided and a plurality of people post one or more pieces of content, which have been scheduled to be registered in advance, at one place, so that comparison and selection can be performed on the content, in which a plurality of cameras can be registered for a single channel, so that various kinds of content can be simultaneously sent and relayed, in which excessive access to a specific channel to be relayed can be previously prepared for by performing preliminary opinion polls about watching, so that the quality of broadcasting services can be improved, and in which a virtual audience rating and popularity are analyzed using the results of the preliminary opinion polls, so that various kind of sponsors can be secured, thereby being effective in publicizing advertisement.

### 2. Description of the Related Art

Conventional Internet broadcasting has used a method of posting and sending content which had been produced in the past, so that it is impossible to anticipate the existence of content or share the content until the product of the produced content is posted.

Further, in conventional Internet broadcasting, the number of viewers accessing each piece of content cannot be anticipated, so that the quality of broadcasting service deteriorates when an excessive number of viewers access a single piece of content, with the result that it has been difficult to smoothly provide the content.

However, if the visual content to be sent is previously notified, the interest in the corresponding content and the anticipated audience rating can be detected in advance, so that the content can be naturally sent.

### SUMMARY OF THE INVENTION

Accordingly, the present invention has been made keeping in mind the above problems occurring in the prior art, and an object of the present invention is to provide a system for previously notifying and registering content and programming channels and a method thereof, , in which a program schedule for respective channels and time zones is provided, so that users can easily detect the channel and day and time at which desired content will be relayed, and in which a content provider can register content in a distributed manner for respective times zones when the content is registered and the content is relayed only at the corresponding time even though the content was previously registered, so that the inconvenience of registering content one by one at the time of relaying the content can be solved.

Further, another object of the present invention is to provide a system for previously notifying and registering content and programming channels and a method thereof, in which a plurality of pieces of content can be simultaneously registered in a single channel if the content is owned by a content provider and a plurality of cameras can be registered if the content is relayed in real time, so that various kinds of content can be simultaneously sent and relayed.

Further, another object of the present invention is to provide a system for previously notifying and registering content and programming channels and a method thereof, which enables a user to conveniently search for content.

Further, another object of the present invention is to provide a system for previously notifying and registering content and programming channels and a method thereof, in which service levels are determined in consideration of safe content provision, the number of times that one or more users have watched content and a quality evaluation score, and the number of cameras and keywords to be registered is restricted depending on the service level, so that a content provider who gets a high service level score can register a larger number of cameras and keywords, thereby simultaneously registering a plurality of pieces of content.

Further, another object of the present invention is to provide a system for previously notifying and registering content and programming channels and a method thereof, which enables a content provider to register content beforehand, to perform preliminary opinion polls about the intention to watch the content immediately before the content is relayed using a previous notification program, and to calculate the number of users who intend to watch the content, so that the quality of the broadcasting service may be improved by preparing for excessive access being made to a corresponding relay channel, and which enables the content provider to analyze popularity using the results of the calculation, so that the content provider can secure various kinds of sponsors for popular content, thereby obtaining an advertisement effect.

Further, another object of the present invention is to provide a system for previously notifying and registering content and programming channels and a method thereof, which the stored channel numbers is possible to be provided such as phone number according to classification of previously setting and to watch easily worldwide contents.

Further, another object of the present invention is to provide a system for previously notifying and registering content and programming channels and a method thereof, which unique channel number is established and the channel number is inputted by a remote control, and then a content of inputted channel number in current date and time is played immediately.

Further, another object of the present invention is to provide a system for previously notifying and registering content and programming channels and a method thereof, which privately held content is possible to transmit to worldwide.

Further, another object of the present invention is to provide a system for previously notifying and registering content and programming channels and a method thereof, which currently non-existent and imaginary is possible to set a date and time on the program schedule when setting a schedule of the transmission of pre-scheduled content for example performance, talk, teaching, classes, forum and sports, and then user can search the schedule and easily adjust the schedule.

In order to accomplish the above object, the present invention provides 1. A system for previously notifying and registering content and programming channels, comprising a management server; wherein the management server comprises: a channel establishment module for establishing one or more channels in such a way that at least one content provider terminal, stored in a member subscription DataBase (DB), registers one or more main keywords and cameras after member subscription has been performed; a channel registration module for, when the channels are established by the channel establish module, classifying the channels according to genre by making reference to a unique channel DB in which channels have been classified according to genre, and storing the classified channels in a channel registration DB; a program schedule generation module for generating a program schedule DB for respective channels and time zones by making reference to the channels stored in the channel registration DB, and providing the generated program schedule DB to the content provider terminal and at least one content user terminal; a content registration module for enabling the content provider terminal which has established such a channel by making reference to the program schedule DB to select a desired time, set scheduling of the provision of content at the selected time, and store content in a content registration DB; a content provision module for determining whether the content stored in the content registration DB is live content or recorded content, enabling the content to be relayed in real time using the cameras which were registered when the channel was established by the content provider terminal, to be provided to the content user terminal, and simultaneously to be stored in a content storage DB if the content stored in the content registration DB is live content, enabling the content registered by the content provider terminal to be provided to the content user terminal, simultaneously to be stored in the content storage DB, and to be provided to the content user terminal at a corresponding time if the content stored in the content registration DB is recorded content; and an audience rating calculation module for storing a number of times that each piece of content has been searched for, the content being searched for using the main keywords input by the content user terminal or through the program schedule DB provided to the content user terminal until before the reservation time set by the program schedule DB, in an audience rating statistics DB, and for adjusting a number at which a channel can be accessed by content user terminals at a time that the corresponding content has to be provided by making reference to the audience rating statistics DB; wherein the channel establishment module differently applies a number of main keywords which can be registered for each of the channels when the channels are established and a number of fixed IP addresses which are assigned for the respective cameras when the cameras are registered depending on service levels in a state in which the service levels are previously set for the respective channels, so that the content provider terminal registers content in an amount equal to or less the number of main keywords and registered cameras corresponding to such a service level for a single channel; and wherein, when the content is stored in the content registration DB by the content provider terminal, the content registration module enables the content to be stored after classification is performed on the content according to a content state in which the content is divided into live content and recorded content, the content picture quality in which the content is divided into High Definition (HD), Standard Definition (SD), and 3-Dimensional (3D) levels, and the kind of content in which the content is divided into charged content and free content.

Further, wherein the audience rating calculation module sorts the content in order of the number of times that the content has been searched for by making reference to the audience rating statistics DB, and provides a program ranking list to the content provider terminal and the content user terminal.

Further, wherein the channel registration module classifies the channels established by the channel establishment module according to genre by making reference to the unique channel DB, randomly generates unique channel numbers for the classified channels, and stores the unique channel numbers in the channel registration DB.

Further, wherein the content registration module enables the content to be provided to the content user terminal only at the scheduled time or after the scheduled time even when the content stored in the content registration DB has been previously stored by the content provider terminal.

Further, wherein the content provision module enables the content to be provided at a corresponding time and simultaneously stored in a content storage DB so that the content can be provided to the content user terminal even when the corresponding time has elapsed if the content provided by the content provider terminal is live content, enables the content to be provided at the corresponding time and simultaneously stored in the content storage DB in a form of recorded content so that the content can be provided to the content user terminal even when the corresponding time has elapsed if the content provided by the content provider terminal is recorded content.

Further, wherein the program schedule DB provides the program schedule for the respective channels and time zones selected from daily, weekly, monthly, and yearly program schedules by the content provider terminal and the content user terminal; and wherein the program schedule is selected by making a classification range of the channels become narrower going from higher ranked channels to lower ranked channels based on the selection of the content provider terminal and the content user terminal.

Further, wherein, when the content stored in the content registration DB is exposed to the program schedule DB, information about the content, such as playing time and performers, is exposed together with a title of the content, and, when the content is searched for by the content user terminal, the content user terminal searches for a desired channel using the main keywords registered when such a channel was established or searches for desired information by making reference to the program schedule DB.

Further, a system for previously notifying and registering contents and programming channels, comprising a management server; wherein the management server comprises: a channel establishment module for establishing one or more channels in such a way that at least one content provider terminal, stored in a member subscription DataBase (DB), after member subscription has been performed; a channel registration module for, when the channels are established by the channel establishment module, allowing the channel numbers by making reference to a unique channel DB in which channels have been classified according to genre, and storing the allowed channel numbers in a channel registration DB; a program schedule generation module for generating a program schedule DB for respective channel numbers stored in the channel registration DB, dates and time zones and providing the generated program schedule DB to the content provider terminal and at least one content user terminal; a content registration module for enabling the content provider terminal which has established such a channel by making reference to the program schedule DB to select a program schedule DB of desired channel number, set scheduling of the transmission of content at the desired date and time since the current-time, register the title of content provided when the set in a program schedule DB and display the title; a content provision module for connecting to a program schedule DB of the input channel number among channel numbers stored in a channel registration DB after inputting channel number from the user terminal, and providing the content to the user terminal if there is in existence registered content in current date and time; and an audience rating calculation module for storing a number of times that each piece of content has been searched for, the content being searched for using the main keywords input by the content user terminal or through the program schedule DB provided to the content user terminal until before the reservation time set by the program schedule DB, in an audience rating statistics DB, and for adjusting a number at which a channel can be accessed by content user terminals at a time that the corresponding content has to be provided by making reference to the audience rating statistics DB; wherein the content registration module enables the content to be displayed on the program schedule DB after registering any one or more kinds of the field of content which will be provided on setting , genre, total playing time, performer information, a content state in which the content is divided into live content and recorded content, the content picture quality in which the content is divided into High Definition (HD), Standard Definition (SD), and 3-Dimensional (3D) levels, and the kind of content in which the content is divided into charged content and free content.

Further, wherein a channel registration module allows the channel numbers by making reference to a unique channel DB in which channels have been classified according to genre, nation, region, language and field and stores the allowed channel numbers in a channel registration DB.

Further, wherein a content provision module connects to a program schedule DB of the input channel number among channel numbers stored in a channel registration DB after inputting channel number from the user terminal, and does not provide the content to the user terminal if there is not in existence registered content in current date and time.

Further, wherein, if any one channel number of the channel numbers stored on a channel registration DB is inputted by a remote control, the management server connects to a program schedule DB of the input channel number and provides the registered content in current date and time to the user terminal.

Further, wherein the content is possible to be dealt in futures.

Further, a method of previously notifying and registering content and programming channels, providing a management server; wherein the management server performs the steps of: (A) establishing one or more channels in such a way that at least one content provider terminal, stored in a member subscription DB, registers one or more main keywords and cameras after member subscription has been performed; (B) when the channels are established at the step (A), classifying the channels according to genre by making reference to a unique channel DB, in which the channels have been previously classified according to the genre and the classified channels have been stored, and storing the classified channels in a channel registration DB; (C) generating a program schedule DB for respective channels and time zones by making reference to the channels stored in the channel registration DB at the step (B), and then providing the generated program schedule DB to the content provider terminal and at least one content user terminal; (D) enabling the content provider terminal which has established such a channel by making reference to the program schedule DB generated at the step (C) to select a desired time, set scheduling of the provision of content at the selected time, and store content in a content registration DB; (E) determining whether the content stored in the content registration DB at the step (D) is live content or recorded content, enabling the content to be relayed in real time using the cameras which were registered when the channel was established by the content provider terminal, to be provided to the content user terminal, and simultaneously to be stored in a content storage DB if the content stored in the content registration DB is live content, and enabling the content registered by the content provider terminal to be provided to the content user terminal, simultaneously to be stored in the content storage DB, and enabling the content to be provided to the content user terminal at a corresponding time if the content stored in the content registration DB is recorded content; and (F) storing a number of times that each piece of content has been searched for, the content being searched for using the main keywords input by the content user terminal or through the program schedule DB provided to the content user terminal until before the reservation time set by the program schedule DB, in an audience rating statistics DB, and adjusting a number at which a channel can be accessed by content user terminals at a time that the corresponding content has to be provided by making reference to the audience rating statistics DB; and wherein the step (A) comprises differently applying a number of main keywords which can be registered for each of the channels when the channels are established and a number of fixed IP addresses which are assigned for the respective cameras when the cameras are registered depending on service levels in a state in which the service levels are previously set for the respective channels, so that the content provider terminal registers content in an amount equal to or less the number of main keywords and registered cameras corresponding to such a service level for a single channel; and wherein the step (D) comprises, when the content is stored in the content registration DB by the content provider terminal, enabling the content to be stored after classification is performed on the content according to a content state in which the content is divided into live content and recorded content, the content picture quality in which the content is divided into HD, SD, and 3D levels, and the kind of content in which the content is divided into charged content and free content.

Further, wherein the step (E) comprises the step of: (E1) if the content provided by the content provider terminal is live content, enabling the content to be provided at a corresponding time and simultaneously to be stored in a content storage DB so that the content can be provided to the content user terminal even when the corresponding time has elapsed; and (E2) if the content provided by the content provider terminal is recorded content, enabling the content to be provided at the corresponding time and simultaneously stored in the content storage DB in a form of recorded content so that the content can be provided to the content user terminal even when the corresponding time has elapsed; wherein the step (B) comprises classifying the channels established at the step (A) according to genre by making reference to the unique channel DB, randomly generating unique channel numbers for the classified channels, and storing the unique channel numbers in the channel registration DB; and wherein the step (F) comprises sorting the content in order of the number of times that the content has been searched for by making reference to the audience rating statistics DB, and providing a program ranking list to the content provider terminal and the content user terminal.

Further, wherein the program schedule DB provides the program schedule for the respective channels and time zones selected from daily, weekly, monthly, and yearly program schedules by the content provider terminal and the content user terminal; and wherein the program schedule is selected by making a classification range of the channels become narrower going from higher ranked channels to lower ranked channels based on the selection of the content provider terminal and the content user terminal.

Further, a method of previously notifying and registering content and programming channels, providing a management server; wherein the management server performs the steps of: (A) establishing one or more channels in such a way that at least one content provider terminal, stored in a member subscription DataBase (DB), after member subscription has been performed; (B) when the channels are established by the channel establishment module, allowing the channel numbers by making reference to a unique channel DB in which channels have been classified according to genre, and storing the allowed channel numbers in a channel registration DB; (C) generating a program schedule DB for respective channel numbers stored in the channel registration DB, dates and time zones and providing the generated program schedule DB to the content provider terminal and at least one content user terminal; (D) enabling the content provider terminal which has established such a channel by making reference to the program schedule DB to select a program schedule DB of desired channel number, set scheduling of the transmission of content at the desired date and time since the current-time, register the title of content provided when the set in a program schedule DB and display the title; (E) connecting to a program schedule DB of the input channel number among channel numbers stored in a channel registration DB after inputting channel number from the user terminal, and providing the content to the user terminal if there is in existence registered content in current date and time; and (F) storing a number of times that each piece of content has been searched for, the content being searched for using the main keywords input by the content user terminal or through the program schedule DB provided to the content user terminal until before the reservation time set by the program schedule DB, in an audience rating statistics DB, and for adjusting a number at which a channel can be accessed by content user terminals at a time that the corresponding content has to be provided by making reference to the audience rating statistics DB; and wherein the step (D) enables the content to be displayed on the program schedule DB after registering any one or more kinds of the field of content which will be provided on setting, genre, total playing time, performer information, a content state in which the content is divided into live content and recorded content, the content picture quality in which the content is divided into High Definition (HD), Standard Definition (SD), and 3-Dimensional (3D) levels, and the kind of content in which the content is divided into charged content and free content.

Further, wherein the step (B) allows the channel numbers by making reference to a unique channel DB in which channels have been classified according to genre, nation, region, language and field and stores the allowed channel numbers in a channel registration DB; and Wherein the step (E) connects to a program schedule DB of the input channel number among channel numbers stored in a channel registration DB after inputting channel number from the user terminal, and does not provide the content to the user terminal if there is not in existence registered content in current date and time.

Further, wherein, if any one channel number of the channel numbers stored on a channel registration DB is inputted by a remote control, the management server connects to a program schedule DB of the input channel number and provides the registered content in current date and time to the user terminal.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram showing a system for previously notifying and registering Internet broadcasting content and programming channels according to an embodiment of the present invention;
FIG. 2 is a block diagram showing the management server of the system for previously notifying and registering Internet broadcasting content and programming channels according to an embodiment of the present invention;
FIG. 3 is a view showing an example of a daily program schedule provided from the system for previously notifying and registering Internet broadcasting content and programming channels according to the embodiment of the present invention;
FIG. 4 is a view showing an example of a weekly program schedule provided from the system for previously notifying and registering Internet broadcasting content and programming channels according to the embodiment of the present invention;
FIG. 5 is a flowchart showing a method of previously notifying and registering Internet broadcasting content and programming channels according to an embodiment of the present invention; and
FIG. 6 is a detailed block diagram showing the system for previously notifying and registering Internet broadcasting content and programming channels according to an embodiment of the present invention.

### DESCRIPTION OF THE PREFERRED EMBODIMENTS

Reference should now be made to the drawings, in which the same reference numerals are used throughout the different drawings to designate the same or similar components.

A system for previously notifying and registering Internet broadcasting content and programming channels and a method thereof according to embodiments of the present invention will be described with reference to the attached drawings.

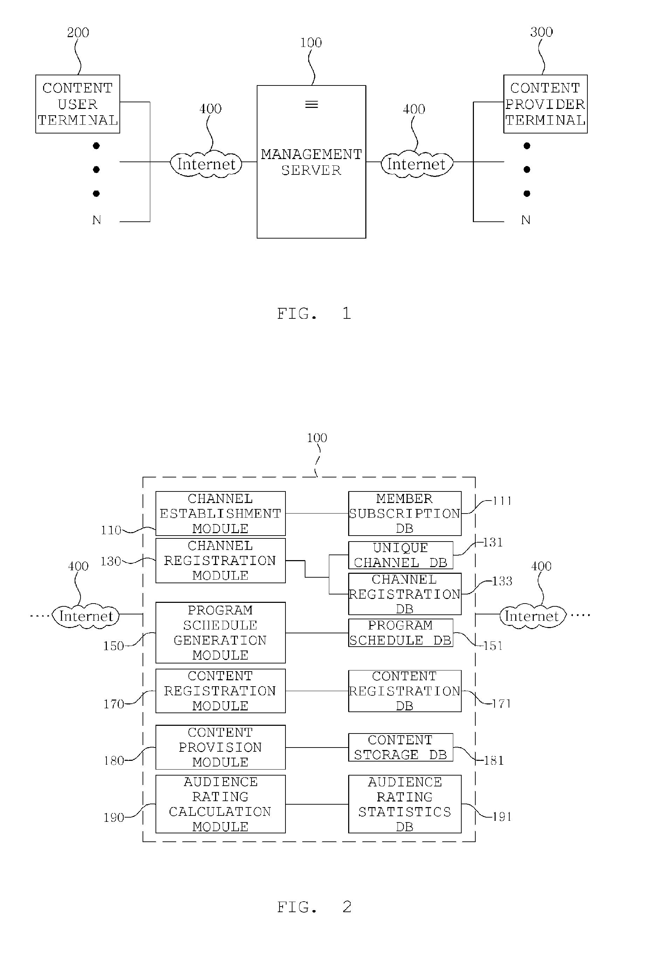

FIG. 1 is a block diagram showing a system for previously notifying and registering Internet broadcasting content and programming channels according to an embodiment of the present invention, and FIG. 2 is a block diagram showing the management server of the system for previously notifying and registering Internet broadcasting content and programming channels according to the embodiment of the present invention.

In the system for previously notifying and registering content and programming channels according to the embodiment of the present invention, a management server 100 includes a channel establishment module 110, a channel registration module 130, a program schedule generation module 150, a content registration module 170, a content provision module 180, and an audience rating calculation module 190.

The channel establishment module 110 establishes channels in such a way that a content provider terminal 300 stored in a member subscription DataBase (DB) 111 registers one or more main keywords and cameras after member subscription has been performed.

Instead of cameras, a digital studio is possible to be registered.

Herein, in the state in which service levels have been previously set for the respective channels, the channel establishment module 110 differently applies the number of main keywords which can be registered for the respective channels when the channels are established, and also differently applies the number of fixed IP addresses which are assigned for the respective cameras when the cameras are registered depending on such a service level, so that the content provider terminal 300 registers content in an amount equal to or less than the number of main keywords and registered cameras corresponding to the service level for a single channel.

Further, the establishment of the channels is applied for by including a content provision plan report, an applier contract document, information about the customer, an application for the name of the channel, an application for a channel number, the type of content, content-related techniques, and by dividing customers into individual and enterprise customers.

When the channels are established by the channel establishment module 110, the channel registration module 130 classifies the channels according to genres by making reference to a unique channel DB 131 for storing channels which have been classified according to genres in advance, and stores the classified channels in a channel registration DB 133.

Herein, the channel registration module 130 classifies the channels established by the channel establishment module 110 according to genres by making reference to the unique channel DB 131, randomly generates unique channel numbers for the classified channels, and stores the unique channel numbers in the channel registration DB 133.

Further, the genres of the unique channel DB 131 may include plays, sports, lectures, hobbies, art, games, discussions, travels, intellectual topics, books, computers, industrial art, photographs, fishing, cooking, playing, clothes, design, language/conversation, and cars.

The program schedule generation module 150 generates a program schedule DB 151 for respective channels and time zones by making reference to the channels stored in the channel registration DB 133, and provides the generated program schedule DB 151 through the content provider terminal 300 and the content user terminal 200.

Herein, it is preferable that the program schedule DB 151 provide a program schedule for each channel and for each time zone selected from daily, weekly, monthly, and yearly program schedules by the content provider terminal 300 and the content user terminal 200, and the program schedule be selected in such a way that the range thereof becomes narrower going from higher ranked channels to lower ranked channels based on the selection of the content provider terminal 300 and the content user terminal 200.

The content registration module 170 enables the content provider terminal 300 which has established such a channel by making reference to the program schedule DB 151 to select the desired time and set the scheduling of the provision of content at the selected time, and enables the content provider terminal 300 to store content in a content registration DB 171 at the set reservation time of the corresponding channel.

Herein, when the content is stored in the content registration DB 171 by the content provider terminal 300, the content registration module 170 enables the content to be stored after classification is performed on the content according to a content state in which the content is divided into live content and recorded content, the content picture quality in which the content is divided into High Definition (HD), Standard Definition (SD), and 3-Dimensional (3D) levels, and the kind of content in which the content is divided into charged content and free content.

Further, the content registration module 170 enables the content to be provided to the content user terminal 200 only at the scheduled time or after the scheduled time even when the content, stored in the content registration DB 171, has been previously stored by the content provider terminal 300.

The content provision module 180 determines whether the content stored in the content registration DB 171 is live content or recorded content. If the content stored in the content registration DB 171 is live content, the content is stored in a content storage DB 181 at the same time that the content is relayed in real time using the cameras which had been registered when the channel was established by the content provider terminal 300, and provided through the content user terminal 200. If the content stored in the content registration DB 171 is recorded content, the content is stored in the content storage DB 181 at the same time that the content registered by the content provider terminal 300 is provided to the content user terminal 200, and the content is provided to the content user terminal 200 at the corresponding time.

Herein, when the content provided by the content provider terminal 300 is live content, the content provision module 180 enables the content to be provided at the corresponding time, and simultaneously to be stored in the content storage DB 181 in the form of recorded content so that the content can be provided to the content user terminal 200 after the corresponding time has elapsed. When the content provided by the content provider terminal 300 is recorded content, the content provision module 180 enables the content to be provided at the corresponding time and simultaneously to be stored in the content storage DB 181 in the form of recorded content so that the content can be provided to the content user terminal 200 after the corresponding time has elapsed.

The audience rating calculation module 190 stores the number of times that content is searched for, the content being searched for using main keywords input by the content user terminal 200 or through the program schedule DB 151 provided to the content user terminal 200 until the reservation time set by the program schedule DB 151, in an audience rating statistics DB 191, and adjusts the number at which the channel can be accessed by the content user terminal 200 at the content provision time with reference to the audience rating statistics DB 191.

Herein, the audience rating calculation module 190 sorts the content in order of the number of times that the corresponding content has been searched for with reference to the audience rating statistics DB 191, and provides a program ranking list to the content provider 300 and the content user terminal 200.

Further, when the content stored in the content registration DB 171 is exposed to the program schedule DB 151, information about the content, such as playing time and performers, is exposed together with the title of the content. When the content is searched for by the content user terminal 200, it is preferable that the content user terminal 200 search for a desired channel using the main keywords registered when the channel was established or search for desired information by making reference to the program schedule DB 151.

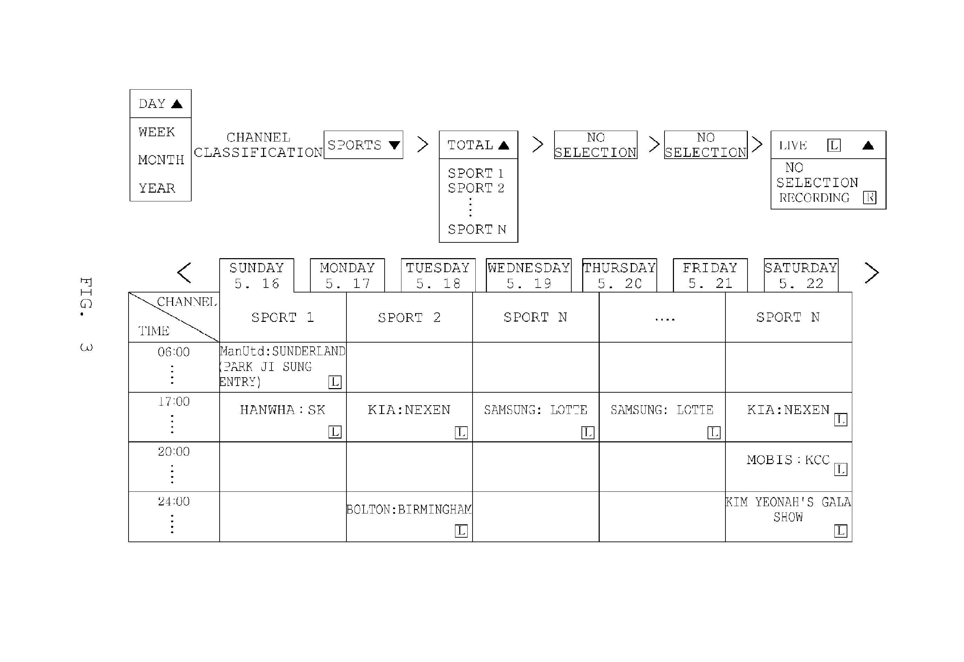

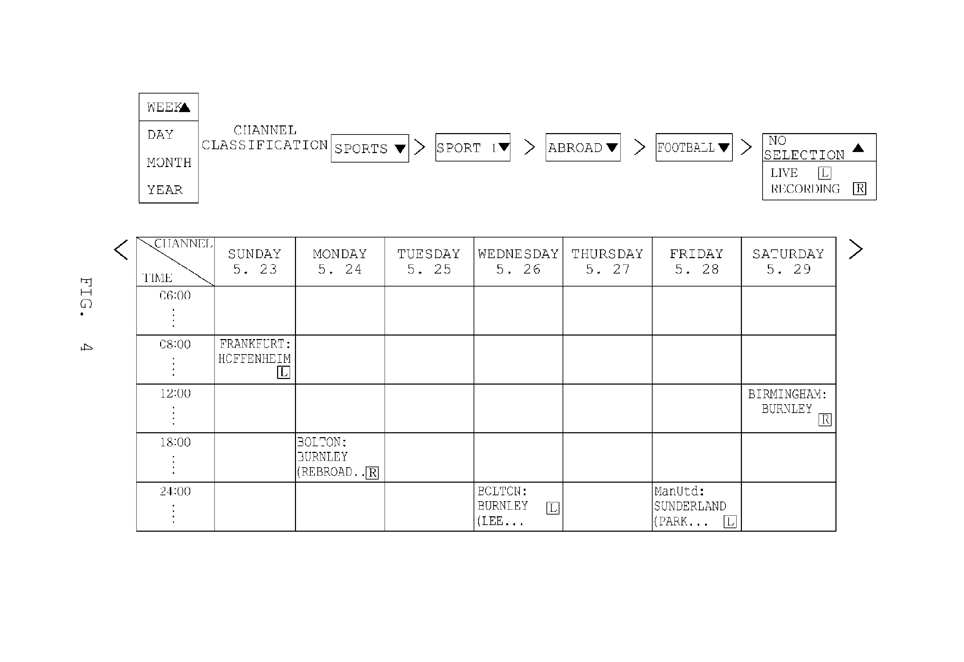

FIG. 3 is a view showing an example of a daily program schedule provided by the system for previously notifying and registering Internet broadcasting content and programming channels according to an embodiment of the present invention, and FIG. 4 is a view showing an example of a weekly program schedule provided by the system for previously notifying and registering Internet broadcasting content and programming channels according to an embodiment of the present invention.

It is preferable that the program schedule be provided so that a desired channel can be selected by selecting one of daily, weekly, monthly, and yearly program schedules and then making the range of channels become narrower going from the higher ranked channels to the lower ranked channels using the classification of the channels, and so that the schedule of live content, recorded content, or all the content can be checked at a glance for respective time zones.

Each configuration of the program schedule shown in FIGS. 3 and 4 is one embodiment of the present invention, and it can be implemented according to another embodiment if the purpose and function thereof are similar to those of the present invention.

Further, when the content user terminal 200 selects content which is able to be played at the corresponding time or before the corresponding time from the program schedule, the corresponding content is relayed at the content user terminal 200, and, when the content user terminal 200 selects content to be played after the corresponding time, the number of times that the corresponding content has been searched for is accumulated and stored in the audience rating statistics DB 191.

Herein, the management server 100 adjusts the number at which the channel can be accessed by the content user terminal 200 at the time that the corresponding content has to be provided by making reference to the number of times that the corresponding content has been searched for which was stored in the audience rating statistics DB 191, thereby providing reliable and quality-improved content.

Further, since the audience rating calculation module 190 provides a program ranking list by sorting the channels in order of the number of times that the corresponding content has been searched for with reference to the audience rating statistics DB 191, the content provider refers to the program ranking list and previously anticipates and plans content capable of being popular, thereby previously producing content capable of being popular and securing advertisers or sponsors through licensing contracts with one or more copyrighters.

In the system for previously notifying and registering content and programming channels according to the embodiment of the present invention, a management server 100 includes a channel establishment module 110, a channel registration module 130, a program schedule generation module 150, a content registration module 170, a content provision module 180, and an audience rating calculation module 190.

The channel establishment module 110 for establishing one or more channels in such a way that at least one content provider terminal 300, stored in a member subscription DataBase (DB) 111, after member subscription has been performed.

The channel registration module 130 for, when the channels are established by the channel establishment module 110, allowing the channel numbers by making reference to a unique channel DB 131 in which channels have been classified according to genre, and storing the allowed channel numbers in a channel registration DB 133.

Herein, the unique channel DB 131 is possible to store the channel numbers in which have been classified according to genre, nation, region, language and field.

Further, the stored channel numbers in the channel registration DB 133 is possible to be provided such as phone number according to classification of previously setting.

The program schedule generation module 150 for generating a program schedule DB for respective channel numbers stored in the channel registration DB 133, dates and time zones and providing the generated program schedule DB 151 to the content provider terminal 300 and at least one content user terminal 200.

The content registration module 170 for enabling the content provider terminal 300 which has established such a channel by making reference to the program schedule DB 151 to select a program schedule DB of desired channel number, set a schedule of the transmission of content at the desired date and time since the current-time, register the title of content provided when the set in a program schedule DB 151 and display the title.

Namely, when setting a schedule of the transmission of pre-scheduled content for example performance, talk, teaching, classes, forum and sports, it is necessary to set a date and time on the program schedule DB 151 because the content is not existence and imaginary in current time.

Herein, the content registration module 170 enables the content to be displayed on the program schedule DB 151 after registering any one or more kinds of the field of content which will be provided on setting, genre, total playing time, performer information, a content state in which the content is divided into live content and recorded content, the content picture quality in which the content is divided into High Definition (HD), Standard Definition (SD), and 3-Dimensional (3D) levels, and the kind of content in which the content is divided into charged content and free content.

Therefore, it is easy to decide whether watch or not because of the displayed informations if the program schedule DB 151 is searched by the user terminal 200.

The content provision module 180 for connecting to a program schedule DB 151 of the input channel number among channel numbers stored in a channel registration DB 133 after inputting channel number from the user terminal 200, and providing the content to the user terminal 200 if there is in existence registered content in current date and time.

Further, the content provision module connects to a program schedule DB 151 of the input channel number among channel numbers stored in a channel registration DB after inputting channel number from the user terminal 200, and does not provide the content to the user terminal 200 if there is not in existence registered content in current date and time.

Namely, if there is not in existence registered content in current time, the irregular broadcast screen displayed on the user terminal 200.

The audience rating calculation module 190 for storing a number of times that each piece of content has been searched for, the content being searched for using the main keywords input by the content user terminal 200 or through the program schedule DB 151 provided to the content user terminal 200 until before the reservation time set by the program schedule DB 151, in an audience rating statistics DB 191, and for adjusting a number at which a channel can be accessed by content user terminals 200 at a time that the corresponding content has to be provided by making reference to the audience rating statistics DB 191.

Therefore, it is possible to prevent service outgage due to user congestion, which is the biggest drawback of internet broadcasting, and transmit content stably.

Further, since the audience rating calculation module 190 provides a program ranking list by sorting the channels in order of the number of times that the corresponding content has been searched for with reference to the audience rating statistics DB 191, the content provider refers to the program ranking list and previously anticipates and plans content capable of being popular, thereby previously producing content capable of being popular and securing advertisers or sponsors through licensing contracts with one or more copyrighters.

Herein, if any one channel number of the channel numbers stored on a channel registration DB 133 is inputted by a remote control, the management server 100 connects to a program schedule DB 151 of the input channel number and provides the registered content in current date and time to the user terminal 200.

Therefore, the channel number is inputted by a remote control, and then a real content of inputted channel number in current date and time is played time of inputted channel number and broadcasting screen is displayed immediately.

Further, the content is possible to be dealt in futures.

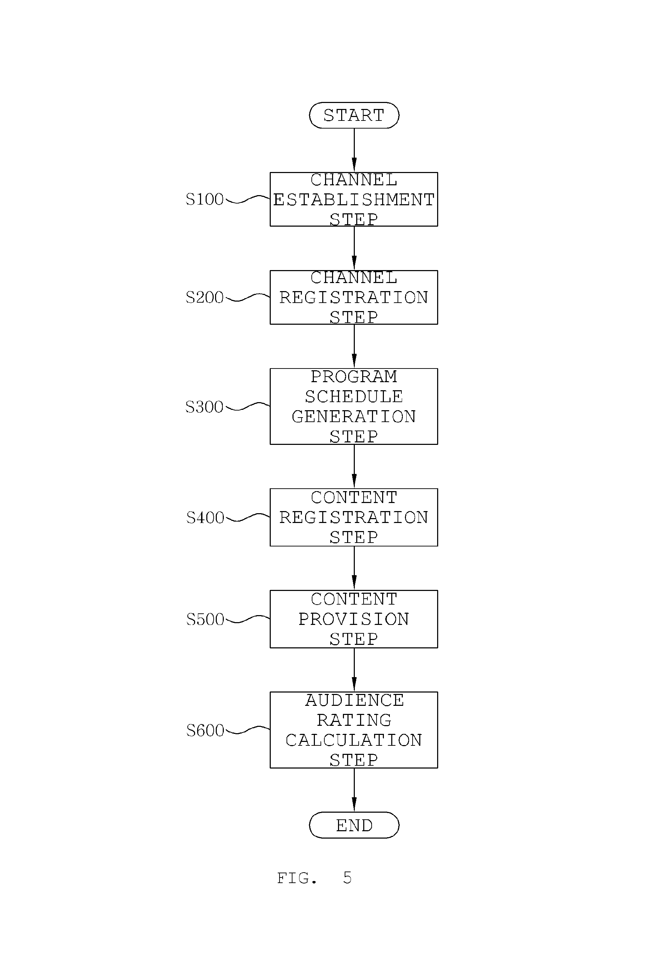

FIG. 5 is a flowchart showing a method of previously notifying and registering Internet broadcasting content and programming channels according to an embodiment of the present invention.

In a method of registering content relayed by the Internet broadcasting and programming channels according to an embodiment of the present invention, the management server 100 performs channel establishment step S100, channel registration step S200, program schedule generation step S300, content registration step S400, content provision step S500, and audience rating calculation step S600.

At channel establishment step S100, main keywords and cameras are registered by the content provider terminal 300 stored in the member subscription DB 111 after the member subscription has been performed, and then channels are established.

Herein, at channel establishment step S100, service levels for the respective channels are set beforehand, and the number of main keywords which can be registered for each of the channels when the channel is established and the number of IP addresses which are assigned for respective cameras when the cameras are registered are differently applied depending on the service levels, and the content provider terminal 300 registers desired content in an amount equal to or less than the number of main keywords and the number of registered cameras corresponding to the service level for a single channel.

At channel registration step S200, when the channels have been established at channel establishment step S100, the channels are classified according to genres by making reference to the unique channel DB 131 in which the channels have been previously classified according to genres and then stored, and the classified channels are stored in the channel registration DB 133.

Herein, at channel registration step S200, the channels established at channel establishment step S100 are classified according to genres by making reference to the unique channel DB 131, and unique channel numbers corresponding to the classified channels are randomly generated and stored in the channel registration DB 133.

At program schedule generation step S300, the program schedule DB 151 for respective channels and time zones is generated by making reference to the channels stored in the channel registration DB 133 in the channel registration step S200, and the generated program schedule DB 151 is provided by the content provider terminal 300 and the content user terminal 200.

At content registration step S400, a desired time is selected by the content provider terminal 300 which has established such a channel with reference to the program schedule DB 151 generated at program schedule generation step S300, the scheduling of the provision of content is set at the selected time, and the corresponding content is stored in the content registration DB 171 by the content provider terminal 300 at the set reservation time.

Herein, at content registration step S400, when the content is stored in the content registration DB 171 by the content provider terminal 300, the content is stored after classification has been performed on the content according to a content state in which the content is divided into live content and recorded content, the content picture quality in which the content is divided into HD, SD, and 3D levels, and the kind of content in which the content is divided into charged content and free content.

At content provision step S500, it is determined whether the content stored in the content registration DB 171 in the content registration step S400 is live content or recorded content. When the content stored in the content registration DB 171 is live content, the content is relayed in real time through the cameras registered when the channel was established by the content provider terminal 300 and then provided to the content user terminal 200, and simultaneously stored in the content storage DB 181. When the content stored in the content registration DB 171 is recorded content, the content registered by the content provider terminal 300 is provided to the content user terminal 200, and simultaneously stored in the content storage DB 181, so that the content is provided to the content user terminal 200 at a corresponding time.

Herein, at content provision step S500, when the content provided by the content provider terminal 300 is live content, it is preferable that the content is provided at a corresponding time and simultaneously stored in the content storage DB 181 in the form of recorded content so that the content may be provided to the content user terminal 200 after the corresponding time has elapsed. When the content provided by the content provider terminal 300 is recorded content, it is preferable that the content be provided at the corresponding time and simultaneously stored in the content storage DB 181 in the form of the recorded content so that the content may be provided to the content user terminal 200 after the corresponding time has elapsed.

At audience rating calculation step S600, the number of times that corresponding content has been searched for is stored in the audience rating statistics DB 191, the content being searched for using the main keywords input by the content user terminal 200 until the reservation time set by the program schedule DB 151 or through the program schedule DB 151 provided to the content user terminal 200, and the number at which the channel can be accessed by the content user terminal 200 is adjusted by making reference to the audience rating statistics DB 191 at the time that the content should be provided.

Herein, at audience rating calculation step S600, the content is sorted in order of the number of times that the corresponding content has been searched for by making reference to the audience rating statistics DB 191, and a program ranking list is provided to the content provider 300 and the content user terminal 200.

Further, the program schedule DB 151 provides a program schedule for the respective channels and time zones selected from daily, weekly, monthly, and yearly program schedules by the content provider terminal 300 and the content user terminal 200, and it is preferable that the program schedule be selected by making the range of the channels become narrower going from the higher ranked channels to the lower ranked channels based on the selection of the content provider 300 and the content user terminal 200.

Further, when content stored in the content registration DB 171 is exposed to the program schedule DB 151, information about the content, such as the playing time and performers, is exposed together with the title of the content. When the content is searched for by the content user terminal 200, the content user terminal 200 searches for a desired channel using the main keywords registered when the channel was established or searches for desired information with reference to the program schedule DB 151.

In the method for previously notifying and registering content and programming channels according to the embodiment of the present invention, a management server 100 includes a channel establishment step S100, a channel registration step S200, a program schedule generation step S300, a content registration step S400, a content provision step S500, and an audience rating calculation step S600.

First of all, at the channel establishment step S100, one or more channels is established in such a way that at least one content provider terminal 300, stored in a member subscription DataBase (DB) 111, after member subscription has been performed.

Then, at the channel registration step S200, when the channels are established by the channel establishment step S100, the channel numbers is allowed by making reference to a unique channel DB 131 in which channels have been classified according to genre, and stored the allowed channel numbers in a channel registration DB 133.

Herein, the unique channel DB 131 is possible to store the channel numbers in which have been classified according to genre, nation, region, language and field.

At the program schedule generation step S300, a program schedule DB 151 is generated for respective channel numbers stored in the channel registration DB 133, dates and time zones and provided the generated program schedule DB 151 to the content provider terminal 300 and at least one content user terminal 200.

And then, at the content registration step S400, the content provider terminal 300 which has established such a channel by making reference to the program schedule DB 151 enables to select a program schedule DB 151 of desired channel number, set a schedule of the transmission of content at the desired date and time since the current-time, register the title of content provided when the set in a program schedule DB 151 and display the title.

Herein, at the content registration step S400, the content registration module 170 enables the content to be displayed on the program schedule DB 151 after registering any one or more kinds of the field of content which will be provided on setting, genre, total playing time, performer information, a content state in which the content is divided into live content and recorded content, the content picture quality in which the content is divided into High Definition (HD), Standard Definition (SD), and 3-Dimensional (3D) levels, and the kind of content in which the content is divided into charged content and free content.

At the content provision step S500, the content provision module 180 for connecting to a program schedule DB 151 of the input channel number among channel numbers stored in a channel registration DB 133 after inputting channel number from the user terminal 200, and providing the content to the user terminal 200 if there is in existence registered content in current date and time.

Further, the content provision module 180 connects to a program schedule DB 151 of the input channel number among channel numbers stored in a channel registration DB after inputting channel number from the user terminal 200, and does not provide the content to the user terminal 200 if there is not in existence registered content in current date and time.

At the audience rating calculation step S600, the audience rating calculation module 190 for storing a number of times that each piece of content has been searched for, the content being searched for using the main keywords input by the content user terminal 200 or through the program schedule DB 151 provided to the content user terminal 200 until before the reservation time set by the program schedule DB 151, in an audience rating statistics DB 191, and for adjusting a number at which a channel can be accessed by content user terminals 200 at a time that the corresponding content has to be provided by making reference to the audience rating statistics DB 191.

Herein, if any one channel number of the channel numbers stored on a channel registration DB 133 is inputted by a remote control, the management server 100 connects to a program schedule DB 151 of the input channel number and provides the registered content in current date and time to the user terminal 200.

Therefore, the channel number is inputted by a remote control, and then a real content of inputted channel number in current date and time is played time of inputted channel number and broadcasting screen is displayed immediately.

FIG. 6 is a detailed block diagram showing the system for previously notifying and registering Internet broadcasting content and programming channels according to an embodiment of the present invention.

As shown in FIG. 6, it is determined whether the content is live content or recorded content. If the content is determined to be live content, the content is provided to the content user terminal through an encoding center, a streaming center, and the Internet. If the content is determined to be recorded content, the content is provided to the content user terminal through a recording center, the encoding center, the streaming center, and the Internet.

Further, since the configuration of the other elements has been described, the description thereof will be omitted.

According to the above-described present invention, it is possible to provide a system for previously notifying and registering Internet broadcasting content and programming channels and a method thereof, in which a program schedule for respective channels and time zones is provided in order of daily, weekly, monthly, and yearly schedules so that a user can easily detect the channel and day and time at which desired content will be relayed, in which a content provider can previously check the situation of the programmed content with reference to the program schedule when registering the content, so that the content provider can register channels in a distributed manner for respective time zones, and in which the content is relayed only at a corresponding time even when the content was previously registered, so that the inconvenience of registering content one by one at the time of relaying the content can be solved.

Further, according to the present invention, it is possible to provide a system for previously notifying and registering Internet broadcasting content and programming channels and a method thereof, in which a plurality of pieces of content can be simultaneously registered in a single channel if the content is owned by a content provider, and a plurality of web cameras can be registered if the content is relayed in real time, so that various kinds of content can be simultaneously sent and relayed.

Further, according to the present invention, it is possible to provide a system for previously notifying and registering Internet broadcasting content and programming channels and a method thereof, in which service levels are determined in consideration of safe content provision, the number of times that one or more users have watched the content, and a quality evaluation score, and the number of cameras and keywords to be registered is restricted depending on the service level, so that a content provider who gets a high service level score is able to register a larger number of cameras and keywords, thereby simultaneously registering a plurality of pieces of content, and so that the possibility of the content being searched for by users increases, thereby being usable at small-sized companies as well as by individuals.

Further, according to the present invention, it is possible to provide a system for previously notifying and registering Internet broadcasting content and programming channels and a method thereof, in which a content provider registers related keywords, details about the content, and the classification performed on the content (for example, live content, recorded content, charged/free content, optimal resolution, and quality divided into HD, SD, and 3D) when registering the content, so that a user can conveniently search for content, and in which a penalty is imposed on a content provider when the content provider does not register scheduled content or registers abnormal content, such as pornographic materials or illegal materials, so that safe and harmless content can be provided to content users.

Further, according to the present invention, it is possible to provide a system for previously notifying and registering Internet broadcasting content and programming channels and a method thereof, which enables a content provider to register content beforehand, to perform preliminary opinion polls about the intention to watch the content immediately before the content is relayed using a previous notification program, and to calculate the number of users who intend to watch the content, and which enables the content provider to analyze popularity using the results of the calculation, so that the content provider can secure various kinds of sponsors for popular content, thereby obtaining an advertisement effect.

Further, according to the present invention, it is possible to provide a system for previously notifying and registering Internet broadcasting content and programming channels and a method thereof, which previously anticipates and notifies the content at the current time point and the content of a time point in the near future as well as content at a time point in the past, so that a system for sharing the creative content of the near future of individuals which have been repeatedly generated as unique content in real time without vanishment, thereby allowing virtual content to be previously anticipated and shared before it has been actualized.

Further, according to the present invention, it is possible to provide a system for previously notifying and registering Internet broadcasting content and programming channels and a method thereof, in which, in the case of the previous registration and reservation of actual worship scenes for national churches, the worship schedule of each of the churches, which is repeatedly performed every week, is predetermined two or three weeks before, so that it is easy to register the later definite worship schedule in a program schedule at two or three weeks before the worship, and the scheduled content should be sent according to the schedule when the scheduled time arrives, with the result that people can easily search for desired content and can adjust their own schedule according to the scheduled time since the reliable organization or groups gain high confidence in the previously notified content.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

Further, according to the present invention, it is possible to provide a system for previously notifying and registering content and programming channels and a method thereof, which the stored channel numbers is possible to be provided such as phone number according to classification of previously setting and to watch easily worldwide contents.

Further, according to the present invention, it is possible to provide a system for previously notifying and registering content and programming channels and a method thereof, which unique channel number is established and the channel number is inputted by a remote control, and then a content of inputted channel number in current date and time is played immediately.

Further, according to the present invention, it is possible to provide a system for previously notifying and registering content and programming channels and a method thereof, which privately held content is possible to transmit to worldwide.

Further, according to the present invention, it is possible to provide a system for previously notifying and registering content and programming channels and a method thereof, which currently non-existent and imaginary is possible to set a date and time on the program schedule when setting a schedule of the transmission of pre-scheduled content for example performance, talk, teaching, classes, forum and sports, and then user can search the schedule and easily adjust the schedule.

## Claims

1. A system for previously notifying and registering content and programming channels, comprising a management server;
wherein the management server comprises:
a channel establishment module for establishing one or more channels in such a way that at least one content provider terminal, stored in a member subscription DataBase (DB), registers one or more main keywords and cameras after member subscription has been performed;
a channel registration module for, when the channels are established by the channel establish module, classifying the channels according to genre by making reference to a unique channel DB in which channels have been classified according to genre, and storing the classified channels in a channel registration DB;
a program schedule generation module for generating a program schedule DB for respective channels and time zones by making reference to the channels stored in the channel registration DB, and providing the generated program schedule DB to the content provider terminal and at least one content user terminal;
a content registration module for enabling the content provider terminal which has established such a channel by making reference to the program schedule DB to select a desired time, set scheduling of the provision of content at the selected time, and store content in a content registration DB;
a content provision module for determining whether the content stored in the content registration DB is live content or recorded content, enabling the content to be relayed in real time using the cameras which were registered when the channel was established by the content provider terminal, to be provided to the content user terminal, and simultaneously to be stored in a content storage DB if the content stored in the content registration DB is live content, enabling the content registered by the content provider terminal to be provided to the content user terminal, simultaneously to be stored in the content storage DB, and to be provided to the content user terminal at a corresponding time if the content stored in the content registration DB is recorded content; and
an audience rating calculation module for storing a number of times that each piece of content has been searched for, the content being searched for using the main keywords input by the content user terminal or through the program schedule DB provided to the content user terminal until before the reservation time set by the program schedule DB, in an audience rating statistics DB, and for adjusting a number at which a channel can be accessed by content user terminals at a time that the corresponding content has to be provided by making reference to the audience rating statistics DB;
wherein the channel establishment module differently applies a number of main keywords which can be registered for each of the channels when the channels are established and a number of fixed IP addresses which are assigned for the respective cameras when the cameras are registered depending on service levels in a state in which the service levels are previously set for the respective channels, so that the content provider terminal registers content in an amount equal to or less the number of main keywords and registered cameras corresponding to such a service level for a single channel; and
wherein, when the content is stored in the content registration DB by the content provider terminal, the content registration module enables the content to be stored after classification is performed on the content according to a content state in which the content is divided into live content and recorded content, the content picture quality in which the content is divided into High Definition (HD), Standard Definition (SD), and 3-Dimensional (3D) levels, and the kind of content in which the content is divided into charged content and free content.

2. The system as set forth in claim 1, wherein the audience rating calculation module sorts the content in order of the number of times that the content has been searched for by making reference to the audience rating statistics DB, and provides a program ranking list to the content provider terminal and the content user terminal.

3. The system as set forth in claim 1, wherein the channel registration module classifies the channels established by the channel establishment module according to genre by making reference to the unique channel DB, randomly generates unique channel numbers for the classified channels, and stores the unique channel numbers in the channel registration DB.

4. The system as set forth in claim 1, wherein the content registration module enables the content to be provided to the content user terminal only at the scheduled time or after the scheduled time even when the content stored in the content registration DB has been previously stored by the content provider terminal.

5. The system as set forth in claim 1, wherein the content provision module enables the content to be provided at a corresponding time and simultaneously stored in a content storage DB so that the content can be provided to the content user terminal even when the corresponding time has elapsed if the content provided by the content provider terminal is live content, enables the content to be provided at the corresponding time and simultaneously stored in the content storage DB in a form of recorded content so that the content can be provided to the content user terminal even when the corresponding time has elapsed if the content provided by the content provider terminal is recorded content.

6. The system as set forth in claim 1,
wherein the program schedule DB provides the program schedule for the respective channels and time zones selected from daily, weekly, monthly, and yearly program schedules by the content provider terminal and the content user terminal; and
wherein the program schedule is selected by making a classification range of the channels become narrower going from higher ranked channels to lower ranked channels based on the selection of the content provider terminal and the content user terminal.

7. The system as set forth in claim 1, wherein, when the content stored in the content registration DB is exposed to the program schedule DB, information about the content, such as playing time and performers, is exposed together with a title of the content, and, when the content is searched for by the content user terminal, the content user terminal searches for a desired channel using the main keywords registered when such a channel was established or searches for desired information by making reference to the program schedule DB.

8. A system for previously notifying and registering contents and programming channels, comprising a management server;
wherein the management server comprises:
a channel establishment module for establishing one or more channels in such a way that at least one content provider terminal, stored in a member subscription DataBase (DB), after member subscription has been performed;
a channel registration module for, when the channels are established by the channel establishment module, allowing the channel numbers by making reference to a unique channel DB in which channels have been classified according to genre, and storing the allowed channel numbers in a channel registration DB;
a program schedule generation module for generating a program schedule DB for respective channel numbers stored in the channel registration DB, dates and time zones and providing the generated program schedule DB to the content provider terminal and at least one content user terminal;
a content registration module for enabling the content provider terminal which has established such a channel by making reference to the program schedule DB to select a program schedule DB of desired channel number, set scheduling of the transmission of content at the desired date and time since the current-time, register the title of content provided when the set in a program schedule DB and display the title;
a content provision module for connecting to a program schedule DB of the input channel number among channel numbers stored in a channel registration DB after inputting channel number from the user terminal, and providing the content to the user terminal if there is in existence registered content in current date and time; and
an audience rating calculation module for storing a number of times that each piece of content has been searched for, the content being searched for using the main keywords input by the content user terminal or through the program schedule DB provided to the content user terminal until before the reservation time set by the program schedule DB, in an audience rating statistics DB, and for adjusting a number at which a channel can be accessed by content user terminals at a time that the corresponding content has to be provided by making reference to the audience rating statistics DB;
wherein the content registration module enables the content to be displayed on the program schedule DB after registering any one or more kinds of the field of content which will be provided on setting , genre, total playing time, performer information, a content state in which the content is divided into live content and recorded content, the content picture quality in which the content is divided into High Definition (HD), Standard Definition (SD), and 3-Dimensional (3D) levels, and the kind of content in which the content is divided into charged content and free content.

9. The system as set forth in claim 8,
wherein a channel registration module allows the channel numbers by making reference to a unique channel DB in which channels have been classified according to genre, nation, region, language and field and stores the allowed channel numbers in a channel registration DB.

10. The system as set forth in claim 8,
Wherein a content provision module connects to a program schedule DB of the input channel number among channel numbers stored in a channel registration DB after inputting channel number from the user terminal, and does not provide the content to the user terminal if there is not in existence registered content in current date and time.

11. The system as set forth in claim 8,
Wherein, if any one channel number of the channel numbers stored on a channel registration DB is inputted by a remote control, the management server connects to a program schedule DB of the input channel number and provides the registered content in current date and time to the user terminal.

12. The system as set forth in claim 8,
Wherein the content is possible to be dealt in futures.

13. A method of previously notifying and registering content and programming channels, providing a management server;
wherein the management server performs the steps of:
(A) establishing one or more channels in such a way that at least one content provider terminal, stored in a member subscription DB, registers one or more main keywords and cameras after member subscription has been performed;
(B) when the channels are established at the step (A), classifying the channels according to genre by making reference to a unique channel DB, in which the channels have been previously classified according to the genre and the classified channels have been stored, and storing the classified channels in a channel registration DB;
(C) generating a program schedule DB for respective channels and time zones by making reference to the channels stored in the channel registration DB at the step (B), and then providing the generated program schedule DB to the content provider terminal and at least one content user terminal;
(D) enabling the content provider terminal which has established such a channel by making reference to the program schedule DB generated at the step (C) to select a desired time, set scheduling of the provision of content at the selected time, and store content in a content registration DB;
(E) determining whether the content stored in the content registration DB at the step (D) is live content or recorded content, enabling the content to be relayed in real time using the cameras which were registered when the channel was established by the content provider terminal, to be provided to the content user terminal, and simultaneously to be stored in a content storage DB if the content stored in the content registration DB is live content, and enabling the content registered by the content provider terminal to be provided to the content user terminal, simultaneously to be stored in the content storage DB, and enabling the content to be provided to the content user terminal at a corresponding time if the content stored in the content registration DB is recorded content; and
(F) storing a number of times that each piece of content has been searched for, the content being searched for using the main keywords input by the content user terminal or through the program schedule DB provided to the content user terminal until before the reservation time set by the program schedule DB, in an audience rating statistics DB, and adjusting a number at which a channel can be accessed by content user terminals at a time that the corresponding content has to be provided by making reference to the audience rating statistics DB; and
wherein the step (A) comprises differently applying a number of main keywords which can be registered for each of the channels when the channels are established and a number of fixed IP addresses which are assigned for the respective cameras when the cameras are registered depending on service levels in a state in which the service levels are previously set for the respective channels, so that the content provider terminal registers content in an amount equal to or less the number of main keywords and registered cameras corresponding to such a service level for a single channel; and
wherein the step (D) comprises, when the content is stored in the content registration DB by the content provider terminal, enabling the content to be stored after classification is performed on the content according to a content state in which the content is divided into live content and recorded content, the content picture quality in which the content is divided into HD, SD, and 3D levels, and the kind of content in which the content is divided into charged content and free content.

14. The method as set forth in claim 13, wherein the step (E) comprises the step of:
(E1) if the content provided by the content provider terminal is live content, enabling the content to be provided at a corresponding time and simultaneously to be stored in a content storage DB so that the content can be provided to the content user terminal even when the corresponding time has elapsed; and
(E2) if the content provided by the content provider terminal is recorded content, enabling the content to be provided at the corresponding time and simultaneously stored in the content storage DB in a form of recorded content so that the content can be provided to the content user terminal even when the corresponding time has elapsed;
wherein the step (B) comprises classifying the channels established at the step (A) according to genre by making reference to the unique channel DB, randomly generating unique channel numbers for the classified channels, and storing the unique channel numbers in the channel registration DB; and
wherein the step (F) comprises sorting the content in order of the number of times that the content has been searched for by making reference to the audience rating statistics DB, and providing a program ranking list to the content provider terminal and the content user terminal.

15. The method as set forth in claim 13,
wherein the program schedule DB provides the program schedule for the respective channels and time zones selected from daily, weekly, monthly, and yearly program schedules by the content provider terminal and the content user terminal; and
wherein the program schedule is selected by making a classification range of the channels become narrower going from higher ranked channels to lower ranked channels based on the selection of the content provider terminal and the content user terminal.
